# EUROPEAN PATENT APPLICATION

(11) **EP 2 716 734 A1**
(43) Date of publication of application: **09.04.2014**
(21) Application number: 12788786.7
(22) Date of filing: 17.05.2012
(51) Int. Cl.: C09K 21/12, C08K 3/34, C08K 5/3462, C08K 5/3492, C08K 7/00, C08L 23/00, C08L 101/00, C09K 21/02, C09K 21/10

(54) **FLAME-RETARDANT AGENT AND FLAME-RETARDANT RESIN COMPOSITION**

(30) Priority: 25.05.2011 JP 2011117226
(71) Applicant: Sakai Chemical Industry Co., Ltd., Sakai-shi, Osaka 590-8502 (JP)
(72) Inventor: OKITA Hiromasa, Sakai-shi Osaka 590-0985 (JP); MURAKAMI Yasuyuki, Sakai-shi Osaka 590-0985 (JP); TSUJIMOTO Hideo, Sakai-shi Osaka 590-0985 (JP); OSHIMA Takanobu, Sakai-shi Osaka 590-0985 (JP)
(74) Representative: Hart-Davis, Jason
(86) International application number: PCT/JP2012/062616
(87) International publication number: WO 2012/161070

(57) **Abstract**

The present invention provides a composite flame retardant which can be produced without using any toxic metal such as antimony trioxide or any halogen such as bromine and chlorine and can exhibit excellent flame retardancy compared with magnesium hydroxide when added in a smaller amount; and a flame retardant resin composition having excellent flame retardancy and excellent physical properties. The present invention relates to a flame retardant including: (A) 100 parts by mass of a reaction product of piperazine with one phosphorus compound selected from phosphoric acid, pyrophosphoric acid, and polyphosphoric acid; (B) 10 to 1000 parts by mass of a reaction product of melamine with a polyacid selected from cyanuric acid, phosphoric acid, pyrophosphoric acid, and polyphosphoric acid; and (C) 0.1 to 100 parts by mass of a reaction product of calcium or magnesium with silicic acid.

## Description

### TECHNICAL FIELD

The present invention relates to a flame retardant and a flame retardant resin composition.

### BACKGROUND ART

Up until now, synthetic resins have been widely used in various fields such as building materials, daily products, autoparts, packaging materials, agricultural materials, and home electric appliances because they have excellent chemical and physical properties. However, many synthetic resins are combustible, and are thus required to be subjected to flame-retarding so as to be practically used.

The flame-retarding of a synthetic resin is typically performed by blending a flame retardant into the resin. Materials which have been typically used as flame retardants for resins include halogen flame retardants, metal hydroxide flame retardants (e.g., magnesium hydroxide), and antimony trioxide which is a flame retardant aid. Halogen flame retardants have an excellent effect of providing flame retardancy, but have a problem of generating toxic substances such as hydrogen halide gas and dioxins when burnt. Also, metal hydroxides have a problem that they cannot give sufficient flame retardancy if the amount used is not large. If the amount of the metal hydroxides is used large, it leads to reduction in the processability of the resins or the physical properties of the molded article. As for antimony trioxide, it has a problem of the toxicity.

Under such circumstances, some flame retardants have been developed as alternatives to the conventional flame retardants. The developed alternatives are, for example, flame retardants containing red phosphorus (Patent Literature 1), flame retardants containing ammonium polyphosphate (Patent Literature 2), flame retardants containing condensed phosphoric acid ester (Patent Literature 3), and flame retardants containing melamine cyanurate (Patent Literatures 4 and 5). Patent Literature 6 teaches a flame retardant containing a salt of piperazine and an inorganic phosphorus compound, selected from the group consisting of piperazine phosphate, piperazine pyrophosphate, piperazine polyphosphate, and a mixture of two or more of these salts; and a salt of melamine and an inorganic phosphorus compound, selected from the group consisting of melamine phosphate, melamine pyrophosphate, melamine polyphosphate, and a mixture of two or more of these salts. However, the flame retardancy effect using these flame retardants is sometimes practically insufficient. Accordingly, flame retardants giving higher flame retardancy have been desired.

### CITATION LIST

### Patent Literature

Patent Literature 1: JP H06-102442 A
Patent Literature 2: JP 2003-096247 A
Patent Literature 3: JP 2006-016587 A
Patent Literature 4: JP 2003-226798 A
Patent Literature 5: JP 2000-178386 A
Patent Literature 6: JP 2010-209239 A

### SUMMARY OF INVENTION

Technical Problem

The present invention aims to provide a flame retardant which has substantially no or sufficiently low toxicity and gives excellent flame retardancy when used in an adequate amount. The present invention also aims to provide a flame retardant resin composition having excellent flame retardancy and physical properties.

### Solution to Problem

The first aspect of the present invention is a flame retardant including:
(A) 100 parts by mass of a reaction product of piperazine with one phosphorus compound selected from phosphoric acid, pyrophosphoric acid, and polyphosphoric acid;
(B) 10 to 1000 parts by mass of a reaction product of melamine with a polyacid selected from cyanuric acid, phosphoric acid, pyrophosphoric acid, and polyphosphoric acid; and
(C) 0.1 to 100 parts by mass of a reaction product of calcium or magnesium with silicic acid.

The second aspect of the present invention is a flame retardant resin composition including 100 parts by mass of a synthetic resin, and 2 to 250 parts by mass of the above flame retardant.

### Advantageous Effects of Invention

Blending into a resin a flame retardant containing the three components of (A) to (C) in combination enables achievement of high flame retardancy even when the amount of the flame retardant is small. Thereby, a resin composition having excellent flame retardancy can be obtained.

### DESCRIPTION OF EMBODIMENTS

Hereinafter, the present invention is described in detail.

### (1) Component (A)

The component (A) in the present invention is a reaction product of piperazine with one phosphorus compound selected from phosphoric acid, pyrophosphoric acid, and polyphosphoric acid.

The mixing ratio of piperazine to a phosphorus compound (i.e., composition ratio of the component (A)) is not particularly limited if the flame retardancy effect can be achieved. Still, the ratio (by mole) of piperazine to phosphoric acid, pyrophosphoric acid, or polyphosphoric acid is preferably 1:1 to 1:4, and more preferably 1:2 to 1:3.

Specific examples of the component (A) include piperazine phosphate, piperazine pyrophosphate, piperazine polyphosphate, and a mixture containing two or more of these piperazine salts.

### (2) Component (B)

The component (B) in the present invention is a reaction product of melamine with a polyacid selected from cyanuric acid, phosphoric acid, pyrophosphoric acid, and polyphosphoric acid.

In the case that the component (B) is a reaction product of melamine with cyanuric acid, the mixing ratio of melamine to cyanuric acid is not particularly limited if the flame retardancy effect is achieved. Still, the ratio (by mole) of melamine to cyanuric acid is preferably 1:1 to 1:2, and more preferably 1:1 to 1:1.5.

In the case that the component (B) is a reaction product of melamine with phosphoric acid, pyrophosphoric acid, or polyphosphoric acid, the mixture ratio of melamine to phosphoric acid, pyrophosphoric acid, or polyphosphoric acid is not particularly limited if the flame retardancy effect is achieved. Still, the ratio (by mole) of melamine to phosphoric acid, pyrophosphoric acid, or polyphosphoric acid is preferably 1:1 to 1:4, and more preferably 1:2 to 1:3.

Specific examples of the component (B) include melamine cyanurate, melamine phosphate, melamine pyrophosphate, melamine polyphosphate, and a mixture containing two or more of these melamine salts.

### (3) Component (C)

The component (C) in the present invention is a reaction product of calcium or magnesium with silicic acid. Specific examples of the component (C) include calcium silicate and magnesium silicate. Particularly, calcium silicate is preferred.

The mixing ratio of calcium or magnesium to silicic acid is not particularly limited if the flame retardancy effect is achieved. Still, the ratio (by mole) is preferably 1:5 to 5:1, and more preferably 1:3 to 3:1.

Preferred combinations of the components (A) to (C) include, but not particularly limited to, the following combinations.
Component (A): piperazine phosphate
Component (B): melamine cyanurate
Component (C): calcium silicate

Component (A): piperazine pyrophosphate
Component (B): melamine cyanurate
Component (C): calcium silicate

Component (A): piperazine polyphosphate
Component (B): melamine cyanurate
Component (C): calcium silicate

### Flame retardant

The flame retardant of the present invention contains 100 parts by mass of the component (A), 10 to 1000 parts by mass of the component (B), and 0.1 to 100 parts by mass of the component (C). The amount of the component (B) is preferably 20 to 500 parts by mass, and more preferably 30 to 400 parts by mass, for each 100 parts by mass of the component (A). The amount of the component (C) is preferably 0.5 to 50 parts by mass, and more preferably 1 to 20 parts by mass, for each 100 parts by mass of the component (A).

The flame retardant of the present invention may be a one-pack flame retardant obtained by mixing all of the components (A), (B), and (C), or may be a divided flame retardant such as a 2-piece or a 3-piece flame retardant of which the components are mixed when used. The mixing method for preparing a flame retardant is not particularly limited, and a known stirring or mixing process may be used.

### Flame retardant resin composition

The flame retardant resin composition of the present invention is a composition containing 100 parts by mass of a synthetic resin and 2 to 250 parts by mass of the above flame retardant.

Examples of the above synthetic resin include, but not particularly limited to, polyolefins such as α-olefin polymers (e.g., polypropylene, high-density polyethylene, low-density polyethylene, linear low-density polyethylene, polybutene-1, poly(3-methylpentene)) or ethylene-vinyl acetate copolymer and ethylene-propylene copolymer, and copolymers formed from at least two species of monomers constituting these polyolefins; halogen-containing polymers such as polyvinyl chloride, polyvinylidene chloride, chlorinated polyethylene, chlorinated polypropylene, polyvinylidene fluoride, chlorinated rubbers, vinyl chloride/vinyl acetate copolymer, vinyl chloride/ethylene copolymer, vinyl chloride/vinylidene chloride copolymer, vinyl chloride/vinylidene chloride/vinyl acetate terpolymer, vinyl chloride/acrylate copolymer, vinyl chloride/maleate copolymer and vinyl chloride/cyclohexyl maleimide copolymer, petroleum resin, coumarone resin, polystyrene, polyvinyl acetate, acrylic resin, copolymers (e.g., AS resin, ABS resin, MBS resin, or heat-resistant ABS resin) formed from styrene and/or α-methyl styrene with other monomers (e.g., maleic acid anhydride, phenylmaleimide, methyl methacrylate, butadiene, acrylonitrile), polyvinyl resins such as polymethyl methacrylate, polyvinyl alcohol, polyvinyl formal and polyvinyl butyral, linear polyesters such as polyethylene terephthalate and polybutylene terephthalate, polyamides such as polyphenylene oxide, polycaprolactam and polyhexamethylene adipamide; thermoplastic resins such as polycarbonate, polycarbonate/ABS resin, branched polycarbonate, polyacetal, polyphenylene sulfide, polyurethane and cellulose resins, and blends of these thermoplastic resins. The examples also include thermosetting resins such as phenol resin, urea resin, melamine resin, epoxy resin and unsaturated polyester resins. Polyolefin resins are particularly preferred, and polypropylene resins and polyethylene resins are more preferred.

The amount of the flame retardant is 2 to 250 parts by mass for each 100 parts by mass of the synthetic resin. The amount is preferably 10 to 150 parts by mass, and more preferably 15 to 100 parts by mass.

The flame retardant resin composition of the present invention may further contain additives such as a phenolic antioxidant, a phosphoric antioxidant, a thioether antioxidant, an ultraviolet absorber, and a hindered amine light stabilizer, as needed. These additives can also stabilize a flame retardant resin composition.

Examples of the phenolic antioxidant include, but not particularly limited to, 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylenebis[(3,5-di-tert-butyl-4-hydroxyphenyl)propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-metylbenzyl)phenol, stearyl(3,5-di-tert-butyl-4-hydroxyphenyl)propionate, tetrakis[3-(3,5-di-tert-butyl-4-hydroxyphenyl)methyl propionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate, bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2-{ (3-tert-butyl-4-hydroxy-5-methylphenyl)propionyloxy}ethyl]-2,4,8,10-tetraoxaspiro[5,5]undecane, and triethylene glycol bis[(3-tert-butyl-4-hydroxy-5-methylphenyl)propionate]. In the case that the flame retardant resin composition of the present invention contains the above phenolic antioxidant, the amount of the phenolic antioxidant is 0.001 to 10 parts by mass, preferably 0.01 to 5 parts by mass, for each 100 parts by mass of the resin.

Examples of the phosphorus antioxidant include, but not particularly limited to, trisnonylphenyl phosphite, tris[2-tert-butyl-4-(3-tert-butyl-4-hydroxy-5-methylphenylthio)-5-methylphenyl]phosphite, tris(2,4-di-tert-butylphenyl)phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-di-tert-butylphenyl)-2-ethylhexyl phosphite, 2,2'-methylenebis(4,6-di-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and a phosphite of 2-ethyl-2-butylpropylene glycol and 2,4,6-tri-tert-butylphenol. In the case that the flame retardant resin composition of the present invention contains the above phosphoric antioxidant, the amount of the phosphoric antioxidant is 0.001 to 10 parts by mass, preferably 0.01 to 5 parts by mass, for each 100 parts by mass of the resin.

Examples of the thioether antioxidant include, but not particularly limited to, dialkyl thiodipropionates such as dilauryl thiodipropionate, dimyristyl thiodipropionate, and distearyl thiodipropionate, and pentaerythritol tetrakis(3-laurylthiopropionate). In the case that the flame retardant resin composition of the present invention contains the above thioether antioxidant, the amount of the thioether antioxidant is 0.001 to 10 parts by mass, preferably 0.01 to 5 parts by mass, for each 100 parts by mass of the resin.

Examples of the ultraviolet absorber include, but not particularly limited to, 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate, and methyl-2-cyano-3-methyl-3-(p-methoxyphenyl)acrylate; triaryl triazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. In the case that the flame retardant resin composition of the present invention contains the above ultraviolet absorber, the amount of the ultraviolet absorber is 0.001 to 30 parts by mass, preferably 0.01 to 10 parts by mass, for each 100 parts by mass of the resin.

Examples of the hindered amine light stabilizer include, but not particularly limited to, 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl) di(tridecyl)-1,2,3,4-butanetetracarboxylate, bis(1,2,2,6,6-pentamethyl-4-piperidyl) di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensation product, 1,6-bis(2,2,6,6-tetramethyl-4-piperidylamino)hexane/2,4-dichloro-6-morpholino-s-triazine polycondensation product, 1,6-bis(2,2,6,6-tetramethyl-4-piperidylamino)hexane/2,4-dichloro-6-tert-octylamino-s-triazine polycondensation product, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-yl]aminoundecane, and 1,6,11-tris[2,4-bis(N-butyl-N-(1,2,2,6,6-pentamethyl-4-piperidyl)amino)-s-triazin-6-yl]aminoundecane. In the case that the flame retardant resin composition of the present invention contains the above hindered amine light stabilizer, the amount of the hindered amine light stabilizer is 0.001 to 30 parts by mass, preferably 0.01 to 10 parts by mass, for each 100 parts by mass of the resin.

The flame retardant resin composition of the present invention may further contain a nucleating agent (e.g., aluminum p-tert-butyl benzoate, aromatic phosphoric acid ester metal salt, dibenzylidene sorbitol), an antistatic agent, metal soap, hydrotalcite, a triazine ring-containing compound, filler, a pigment, a lubricant, and a foaming agent, as needed.

The flame retardant resin composition of the present invention may be formed into a molded article by a common molding method such as injection molding. Such a molded article is also one aspect of the present invention. The form of the molded article of the present invention is not limited. Examples of the form of the molded article include the form of power plugs, connectors, sleeves, boxes, tape substrates, tubes, sheets, and films.

In the case that the molded article of the present invention such as an electric wire component is obtained by injection molding, injection molding may be performed with a cylinder temperature of about 190°C and a head temperature of about 190°C. The apparatus for injection molding may be an injection-molding machine commonly used for molding a material such as PVC resin.

### EXAMPLES

Hereinafter, the present invention is described in detail based on examples which, however, are not intended to limit the scope of the invention. Here, the formulations shown in Tables 1 to 5 are all expressed in parts by mass.

### <UL-94V test>

The flame retardancy test was performed based on UL-94 (vertical flame test method) of the UL standards. A specimen having a length of 127 mm, a width of 12.7 mm, and a thickness of 1.6 mm was vertically supported. Flame of a burner was brought into contact with the lower end of the specimen for 10 seconds. Then the flame was removed, and the time it took for a flame of the specimen to go out was measured. Simultaneously with the flame extinction, the flame of the burner was brought into contact with the specimen for 10 seconds for the second time, and the time it took for a flame of the specimen to go out was measured in the same manner as in the first measurement. Also, whether or not a piece of cotton placed below the specimen was ignited by burning cinders fallen from the specimen was observed.

The flame retardancy of the specimens were evaluated in accordance with UL-94 standards from the results including the combustion time after the first and second flame contacts, and presence or absence of ignition of the piece of cotton. In the flame retardancy evaluation, V-0 represents the highest level of flame retardancy, followed by lower flame retardancy levels of V-1 and V-2. If a specimen is not classified into any of the levels from V-0 to V-2, the specimen was evaluated as "burnt".

### <Oxygen index test (in accordance with JIS K 7291)>

A specimen having a length of 125 mm, a width of 6 mm, and a thickness of 3 mm was vertically supported. The upper end of the specimen was ignited by a flame of a burner. The flame was removed when the upper end was burnt in the shape of flame of a candle. Immediately after the removal, the burning time and the burning length were measured. That is, the minimum concentration of oxygen (L.O.I.: Limiting Oxygen Index) required to maintain a burning time of 3 minutes or longer, or a burning length of 50 mm or longer was determined.

### <Tensile properties test (in accordance with JIS K 7113)>

The tensile elongation (%) was measured using No. 2 specimens in accordance with JIS K 7113.

### [Preparation of flame retardant]

Piperazine pyrophosphate (component (A), 50 parts by mass), melamine cyanurate (component (B), 17 parts by mass, MC-5S produced by Sakai Chemical Industry Co., Ltd.), and calcium silicate (component (C), 1 part by mass) were mixed with stirring for 10 minutes by a V blender (NV-200 produced by Nishimura Machine Works Co., Ltd.). Thereby, a mixed flame retardant of the components (A), (B), and (C) was produced.

### [Preparation of flame retardant resin composition]

The produced flame retardant (68 parts by mass) was mixed with ethylene ethyl acrylate resin (100 parts by mass, NUC-6510 produced by Dow Chemical, extrusion-molding grade) and calcium stearate (1 part by mass, SC-P produced by Sakai Chemical Industry Co., Ltd.) as a lubricant, so that an ethylene ethyl acrylate resin composition was prepared.

### [Example 1]

The prepared ethylene ethyl acrylate resin composition was kneaded at 130°C to 150°C using a roll (8-inch electrically heated roll produced by CONPON). The obtained kneaded product was pelletized using a grinder (DAS-14 produced by Daiko Seiki Co., Ltd.). The pellets were injection-molded at 190°C, so that a 1.6-mm-thick specimen and a 3.0-mm-thick specimen were produced. The obtained specimens were subjected to the flame retardancy test in accordance with the above process. The results are shown in Table 1.

### [Example 2]

A 1.6-mm-thick specimen and a 3.0-mm-thick specimen were produced in the same manner as in Example 1, except that the amount of piperazine pyrophosphate was changed to 34 parts by mass and the amount of melamine cyanurate was changed to 33 parts by mass. The specimens were subjected to the flame retardancy test in accordance with the above process. The results are shown in Table 1.

### [Example 3]

A 1.6-mm-thick specimen and a 3.0-mm-thick specimen were produced in the same manner as in Example 1, except that the amount of piperazine pyrophosphate was changed to 17 parts by mass and the amount of melamine cyanurate was changed to 50 parts by mass. The specimens were subjected to the flame retardancy test in accordance with the above process. The results are shown in Table 1.

### [Example 4]

A 1.6-mm-thick specimen and a 3.0-mm-thick specimen were produced in the same manner as in Example 1, except that 50 parts by mass of piperazine polyphosphate was used in place of piperazine pyrophosphate. The specimens were subjected to the flame retardancy test in accordance with the above process. The results are shown in Table 1.

### [Example 5]

A 1.6-mm-thick specimen and a 3.0-mm-thick specimen were produced in the same manner as in Example 1, except that 17 parts by mass of melamine polyphosphate (MPP-A produced by Sanwa Chemical Co., Ltd.) was used in place of melamine cyanurate. The specimens were subjected to the flame retardancy test in accordance with the above process. The results are shown in Table 1.

### [Example 6]

A 1.6-mm-thick specimen and a 3.0-mm-thick specimen were produced in the same manner as in Example 1, except that 1 part by mass of magnesium silicate was used in place of calcium silicate. The specimens were subjected to the flame retardancy test in accordance with the above process. The results are shown in Table 1.

### [Example 7]

A 1.6-mm-thick specimen and a 3.0-mm-thick specimen were produced in the same manner as in Example 1, except that the amount of melamine cyanurate was changed to 10 parts by mass and the amount of calcium silicate was changed to 7 parts by mass. The specimens were subjected to the flame retardancy test in accordance with the above process. The results are shown in Table 1.

### [Example 8]

A 1.6-mm-thick specimen and a 3.0-mm-thick specimen were produced in the same manner as in Example 1, except that 1 part by mass of zinc oxide (Fine zinc oxide, product of Sakai Chemical Industry Co., Ltd.) was further used. The specimens were subjected to the flame retardancy test in accordance with the above process. The results are shown in Table 1.

### [Example 9]

A 1.6-mm-thick specimen and a 3.0-mm-thick specimen were produced in the same manner as in Example 1, except that the amount of piperazine pyrophosphate was changed to 32 parts by mass and the amount of melamine cyanurate was changed to 11 parts by mass. The specimens were subjected to the flame retardancy test in accordance with the above process. The results are shown in Table 1.

### [Comparative Example 1]

Piperazine pyrophosphate (67 parts by mass) and calcium silicate (1 part by mass) were mixed with stirring for 10 minutes by a V blender (NV-200 produced by Nishimura Machine Works Co., Ltd.). Thereby, a flame retardant was produced. An ethylene ethyl acrylate resin composition was produced in the same manner as in the above mentioned [preparation of flame retardant resin composition]. A 1.6-mm-thick specimen and a 3.0-mm-thick specimen were produced in the same manner as in Example 1. The obtained specimens were subjected to the flame retardancy test in accordance with the above process. The results are shown in Table 2.

### [Comparative Example 2]

A 1.6-mm-thick specimen and a 3.0-mm-thick specimen were produced in the same manner as in Comparative Example 1, except that 67 parts by mass of melamine cyanurate was used in place of 67 parts by mass of piperazine pyrophosphate. The specimens were subjected to the flame retardancy test in accordance with the above process. The results are shown in Table 2.

### [Comparative Example 3]

A 1.6-mm-thick specimen and a 3.0-mm-thick specimen were produced in the same manner as in Example 1, except that no calcium silicate was used. The specimens were subjected to the flame retardancy test in accordance with the above process. The results are shown in Table 2.

### [Comparative Example 4]

An ethylene ethyl acrylate resin (100 parts by mass, NUC-6510 produced by Dow Chemical, extrusion-molding grade) and ammonium polyphosphate (67 parts by mass, MPP-A produced by Sanwa Chemical Co., Ltd.) were mixed, so that an ethylene ethyl acrylate resin composition was prepared. A 1.6-mm-thick specimen and a 3.0-mm-thick specimen were obtained in the same manner as in Example 1. The obtained specimens were subjected to the flame retardancy test in accordance with the above process. The results are shown in Table 2.

**[Table 1]**

| | Example | | | | | | | | |
|---|---|---|---|---|---|---|---|---|---|
| | 1 | 2 | 3 | 4 | 5 | 6 | 7 | 8 | 9 |
| Ethylene ethyl acrylate resin | 100 | 100 | 100 | 100 | 100 | 100 | 100 | 100 | 100 |
| Piperazine pyrophosphate | 50 | 34 | 17 | | 50 | 50 | 50 | 50 | 32 |
| Piperazine polyphosphate | | | | 50 | | | | | |
| Melamine cyanurate | 17 | 33 | 50 | 17 | | 17 | 10 | 17 | 11 |
| Melamine polyphosphate | | | | | 17 | | | | |
| Calcium silicate | 1 | 1 | 1 | 1 | 1 | | 7 | 1 | 1 |
| Magnesium silicate | | | | | | 1 | | | |
| Zinc oxide | | | | | | | | 1 | |
| Calcium stearate | 1 | 1 | 1 | 1 | 1 | 1 | 1 | 1 | 1 |
| UL-94 | V-0 | V-0 | V-0 | V-0 | V-0 | V-0 | V-0 | V-0 | V-0 |
| L.O.I. | 39.0 | 35.5 | 32.0 | 39.0 | 40.0 | 38.5 | 38.5 | 40.0 | 35.0 |

| | | | | | | | | | |
|---|---|---|---|---|---|---|---|---|---|
| *The amounts are expressed In parts by mass. | | | | | | | | | |

**[Table 2]**

| | Comparative Example | | | |
|---|---|---|---|---|
| | 1 | 2 | 3 | 4 |
| Ethylene ethyl acrylate resin | 100 | 100 | 100 | 100 |
| Piperazine pyrophosphate | 67 | | 50 | |
| Piperazine polyphosphate | | | | |
| Melamine cyanurate | | 67 | 17 | |
| Melamine polyphosphate | | | | |
| Calcium silicate | 1 | 1 | | |
| Ammonium polyphosphate | | | | 67 |
| Calcium strearate | 1 | 1 | 1 | 1 |
| UL-94 | V-1 | V-2 | V-1 | V-2 |
| L.O.I. | 35.0 | 26.0 | 35.0 | 29.5 |

| | | | | |
|---|---|---|---|---|
| * The amounts are expressed in parts by mass. | | | | |

As shown in Table 1, the resin compositions (Examples 1 to 9) containing all the three components of piperazine pyrophosphate, melamine cyanurate, and calcium silicate were evaluated as having level V-0 flame retardancy, which is the highest level of flame retardancy evaluation in the UL-94 test. In contrast, as shown in Table 2, the resin compositions (Comparative Examples 1 to 4) without one or more of piperazine pyrophosphate, melamine cyanurate, and calcium silicate were evaluated as having a flame retardancy level as low V-1 or V-2. The resin compositions containing ammonium polyphosphate as a flame retardancy component was evaluated as having a flame retardancy level as low V-2, and having L.O.I as low as 29.5.

### [Example 10]

Piperazine pyrophosphate (50 parts by mass), melamine cyanurate (17 parts by mass, MC-5S produced by Sakai Chemical Industry Co., Ltd.), and calcium silicate (1 part by mass) were mixed, and thereby a flame retardant was produced. The produced flame retardant was mixed with a polyethylene resin (100 parts by mass, F30FG produced by Japan Polyethylene Corporation, film grade) and calcium stearate (1 part by mass, SC-P produced by Sakai Chemical Industry Co., Ltd.) as a lubricant, so that a flame retardant resin composition was prepared. The flame-retardant resin composition was kneaded at 130°C to 200°C using a roll (8-inch electrically heated roll produced by CONPON). The obtained kneaded product was pelletized using a grinder (DAS-14 produced by Daiko Seiki Co., Ltd.). The pellets were injection-molded at 190°C, so that a 1.6-mm-thick specimen and a 3.0-mm-thick specimen were produced. The obtained specimens were subjected to the flame retardancy test in accordance with the above process. The results are shown in Table 3.

### [Example 11]

A 1.6-mm-thick specimen and a 3.0-mm-thick specimen were produced in the same manner as in Example 10, except that a polypropylene resin (F113A produced by Prime Polymer Co., Ltd., film grade) was used in place of the polyethylene resin. The specimens were subjected to the flame retardancy test in accordance with the above process. The results are shown in Table 3.

### [Example 12]

Piperazine pyrophosphate (60 parts by mass), melamine cyanurate (20 parts by mass, MC-5S produced by Sakai Chemical Industry Co., Ltd.), and calcium silicate (1 part by mass) were mixed, and thereby a flame retardant was produced. The produced flame retardant was mixed with an ABS resin (100 parts by mass, UT-61 produced by NIPPON A&L INC., extrusion-molding grade) and calcium stearate (1 part by mass, SC-P produced by Sakai Chemical Industry Co., Ltd.) as a lubricant, and thereby a flame retardant resin composition was prepared. The resin composition was kneaded into pellets using a twin-screw extruder (TEX44αII produced by The Japan Steel Works, LTD.). The pellets were injection-molded at 190°C, so that a 1.6-mm-thick specimen and a 3.0-mm-thick specimen were produced. The obtained specimens were subjected to the flame retardancy test in accordance with the above process. The results are shown in Table 3.

### [Comparative Example 5]

A 1.6-mm-thick specimen and a 3.0-mm-thick specimen were produced in the same manner as in Example 10, except that 67 parts by mass of piperazine pyrophosphate was used in place of 50 parts by mass of piperazine pyrophosphate and 17 parts by mass of melamine cyanurate. The specimens were subjected to the flame retardancy test in accordance with the above process. The results are shown in Table 4.

### [Comparative Example 6]

A 1.6-mm-thick specimen and a 3.0-mm-thick specimen were produced in the same manner as in Example 10, except that 67 parts by mass of melamine cyanurate was used in place of 50 parts by mass of piperazine pyrophosphate and 17 parts by mass of melamine cyanurate, and that no calcium silicate was used. The specimens were subjected to the flame retardancy test in accordance with the above process. The results are shown in Table 4.

### [Comparative Example 7]

A 1.6-mm-thick specimen and a 3.0-mm-thick specimen were produced in the same manner as in Example 10, except that no calcium silicate was used. The specimens were subjected to the flame retardancy test in accordance with the above process. The results are shown in Table 4.

### [Comparative Example 8]

A 1.6-mm-thick specimen and a 3.0-mm-thick specimen were produced in the same manner as in Example 11, except that 67 parts by mass of piperazine pyrophosphate was used in place of 50 parts by mass of piperazine pyrophosphate and 17 parts by mass of melamine cyanurate. The specimens were subjected to the flame retardancy test in accordance with the above process. The results are shown in Table 4.

### [Comparative Example 9]

A 1.6-mm-thick specimen and a 3.0-mm-thick specimen were produced in the same manner as in Example 11, except that 67 parts by mass of melamine cyanurate was used in place of 50 parts by mass of piperazine pyrophosphate and 17 parts by mass of melamine cyanurate, and that no calcium silicate was used. The specimens were subjected to the flame retardancy test in accordance with the above process. The results are shown in Table 4.

### [Comparative Example 10]

A 1.6-mm-thick specimen and a 3.0-mm-thick specimen were produced in the same manner as in Example 11, except that no calcium silicate was used. The specimens were subjected to the flame retardancy test in accordance with the above process. The results are shown in Table 4.

### [Comparative Example 11]

A 1.6-mm-thick specimen and a 3.0-mm-thick specimen were produced in the same manner as in Example 12, except that 80 parts by mass of piperazine pyrophosphate was used in place of 60 parts by mass of piperazine pyrophosphate and 20 parts by mass of melamine cyanurate. The specimens were subjected to the flame retardancy test in accordance with the above process. The results are shown in Table 4.

### [Comparative Example 12]

A 1.6-mm-thick specimen and a 3.0-mm-thick specimen were produced in the same manner as in Example 12, except that 80 parts by mass of melamine cyanurate was used in place of 60 parts by mass of piperazine pyrophosphate and 20 parts by mass of melamine cyanurate. The specimens were subjected to the flame retardancy test in accordance with the above process. The results are shown in Table 4.

### [Comparative Example 13]

A 1.6-mm-thick specimen and a 3.0-mm-thick specimen were produced in the same manner as in Example 12, except that no calcium silicate was used. The specimens were subjected to the flame retardancy test in accordance with the above process. The results are shown in Table 4.

**[Table 3]**

| | Example | | |
|---|---|---|---|
| | 10 | 11 | 12 |
| Polyethylene resin | 100 | | |
| Polypropylene resin | | 100 | |
| ABS resin | | | 100 |
| Piperazine pyrophosphate | 50 | 50 | 60 |
| Melamine cyanurate | 17 | 17 | 20 |
| Calcium silicate | 1 | 1 | 1 |
| Calcium strearate | 1 | 1 | 1 |
| UL-94 | V-0 | V-0 | V-0 |
| L.O.I. | 38.5 | 41.0 | 31.0 |

| | | | |
|---|---|---|---|
| * The amounts are expressed in parts by mass. | | | |

**[Table 4]**

| | Comparative Example | | | | | | | | |
|---|---|---|---|---|---|---|---|---|---|
| | 5 | 6 | 7 | 8 | 9 | 10 | 11 | 12 | 13 |
| Polyethylene resin | 100 | 100 | 100 | | | | | | |
| Polypropylene resin | | | | 100 | 100 | 100 | | | |
| ABS resin | | | | | | | 100 | 100 | 100 |
| Piperazine pyrophosphate | 67 | | 50 | 67 | | 50 | 80 | | 60 |
| Melamine cyanurate | | 67 | 17 | | 67 | 17 | | 80 | 20 |
| Calcium silicate | 1 | | | 1 | | | 1 | 1 | |
| Calcium strearate | 1 | 1 | 1 | 1 | 1 | 1 | 1 | 1 | 1 |
| UL-94 | V-1 | V-2 | V-1 | V-1 | V-2 | V-1 | V-2 | Burnt | V-1 |
| L.O.I. | 34.0 | 25.0 | 34.0 | 36.0 | 24.5 | 35.5 | 28.5 | 24.0 | 28.5 |

| | | | | | | | | | |
|---|---|---|---|---|---|---|---|---|---|
| *The amounts are expressed in parts by mass. | | | | | | | | | |

As shown in Table 3, the resin compositions (Examples 10 to 12) containing all the three components of piperazine pyrophosphate, melamine cyanurate, and calcium silicate were evaluated as having level V-0 flame retardancy, which is the highest level of flame retardancy evaluation in the UL-94 test. In contrast, as shown in Table 4, the resin compositions (Comparative Examples 5 to 13) without one or more of piperazine pyrophosphate, melamine cyanurate, and calcium silicate were evaluated as having level V-1 flame retardancy at the highest.

The flame retardant of the present invention may be added to a synthetic resin to be subjected to the flame-retarding at any suitable time. For example, the flame retardant may be added to the synthetic resin in a one-pack form containing at least two of the above components (A) to (C), or the components of the flame retardant may be added separately to the synthetic resin.

No difference in the flame retardancy effect was seen between these forms. Also, in the case of one pack, the flame retardant components may be ground either before or after being mixed. The appropriate average particle size of the final flame retardant was found to be 50 µm or smaller, and more preferably 30 µm or smaller.

### [Example 13]

Piperazine pyrophosphate (50 parts by mass), melamine cyanurate (17 parts by mass, MC-5S produced by Sakai Chemical Industry Co., Ltd.), and calcium silicate (1 part by mass) were mixed, and thereby a flame retardant was produced. The produced flame retardant was mixed with an ethylene ethyl acrylate resin (50 parts by mass, NUC-6510 produced by Dow Chemical, extrusion-molding grade), a polyethylene resin (50 parts by mass, F30FG produced by Japan Polyethylene Corporation, film grade), and calcium stearate (1 part by mass, SC-P produced by Sakai Chemical Industry Co., Ltd.) as a lubricant, so that a resin composition was prepared. The prepared resin composition was kneaded at 130°C to 200°C using a roll (8-inch electrically heated roll produced by CONPON). The obtained kneaded product was pelletized using a grinder (DAS-14 produced by Daiko Seiki Co., Ltd.). The pellets were injection-molded at 190°C, so that a 1.6-mm-thick specimen and a 3.0-mm-thick specimen were produced. The obtained specimens were subjected to the tensile properties test in accordance with the above process. The results are shown in Table 5.

### [Example 14]

A 1.6-mm-thick specimen and a 3.0-mm-thick specimen were produced in the same manner as in Example 13, except that the amount of piperazine pyrophosphate was changed to 34 parts by mass and the amount of melamine cyanurate was changed to 33 parts by mass. The specimens were subjected to the tensile properties test in accordance with the above process. The results are shown in Table 5.

### [Example 15]

A 1.6-mm-thick specimen and a 3.0-mm-thick specimen were produced in the same manner as in Example 13, except that the amount of piperazine pyrophosphate was changed to 17 parts by mass and the amount of melamine cyanurate was changed to 50 parts by mass. The specimens were subjected to the tensile properties test in accordance with the above process. The results are shown in Table 5.

### [Comparative Example 14]

An ethylene ethyl acrylate resin (50 parts by mass, NUC-6510 produced by Dow Chemical, extrusion-molding grade), a polyethylene resin (50 parts by mass, F30FG produced by Japan Polyethylene Corporation, film grade), calcium stearate (1 part by mass, SC-P produced by Sakai Chemical Industry Co., Ltd.) as a lubricant, and magnesium hydroxide (230 parts by mass, MGZ-1 produced by Sakai Chemical Industry Co., Ltd.) were mixed, so that a resin composition was prepared. The prepared resin composition was kneaded at 130°C to 200°C using a roll (8-inch electrically heated roll produced by CONPON). The obtained kneaded product was pelletized using a grinder (DAS-14 produced by Daiko Seiki Co., Ltd.). The pellets were injection-molded at 190°C, so that a 1.6-mm-thick specimen and a 3.0-mm-thick specimen were produced. The obtained specimens were subjected to the tensile properties test in accordance with the above process. The results are shown in Table 5.

**[Table 5]**

| | Example | | | Comparative Example |
|---|---|---|---|---|
| | 13 | 14 | 15 | 14 |
| Ethylene ethyl acrylate resin | 50 | 50 | 50 | 50 |
| Polyethylene resin | 50 | 50 | 50 | 50 |
| Piperazine pyrophosphate | 50 | 34 | 17 | |
| Melamine cyanurate | 17 | 33 | 50 | |
| Calcium silicate | 1 | 1 | 1 | |
| Magnesium hydroxide | | | | 230 |
| Calcium strearate | 1 | 1 | 1 | 1 |
| Elongation (%) | 700 | 669 | 630 | 40 |

| | | | | |
|---|---|---|---|---|
| *The amounts are expressed in parts by mass. | | | | |

As shown in Table 5, use of magnesium hydroxide alone as a flame retardant results in a greatly reduced elongation rate, which is not a practical physical property. In contrast, the molded articles produced from the compositions of Examples 13 to 15 containing all the components (A) to (C) in the present invention showed a high elongation of higher than 600%.

The flame retardant of the present invention may be added to a synthetic resin to be subjected to the flame retarding at any suitable time. For example, the flame retardant may be added to the synthetic resin in a one-pack form containing at least two of the above components (A) to (C), or the components of the flame retardant may be added separately to the synthetic resin.

No difference in the elongation was seen between these forms. Also, in the case of one pack, the flame retardant components may be ground either before or after being mixed. The appropriate average particle size of the final flame retardant was found to be 50 µm or smaller, and more preferably 30 µm or smaller.

As described above, the molded articles produced from the flame retardant resin composition of the present invention were found to have high flame retardancy and a practically sufficient mechanical property (elongation). The flame retardant of the present invention containing all of the components (A) to (C) was therefore revealed to show higher flame retardancy than conventional products, without deteriorating the physical properties of the resin composition.

## Claims

1. A flame retardant comprising:
(A) 100 parts by mass of a reaction product of piperazine with one phosphorus compound selected from phosphoric acid, pyrophosphoric acid, and polyphosphoric acid;
(B) 10 to 1000 parts by mass of a reaction product of melamine with a polyacid selected from cyanuric acid, phosphoric acid, pyrophosphoric acid, and polyphosphoric acid; and
(C) 0.1 to 100 parts by mass of a reaction product of calcium or magnesium with silicic acid.

2. A flame retardant resin composition comprising
100 parts by mass of a synthetic resin, and
2 to 250 parts by mass of the flame retardant according to claim 1.

3. The flame retardant resin composition according to claim 2,
wherein the component (C) is calcium silicate.

4. The flame retardant resin composition according to claim 2 or 3,
wherein the synthetic resin is a polyolefin resin.

5. The flame retardant resin composition according to claim 4,
wherein the polyolefin resin is a polypropylene resin.

6. The flame retardant resin composition according to claim 4,
wherein the polyolefin resin is a polyethylene resin.
